# EUROPÄISCHE PATENTSCHRIFT

(11) **EP 4 483 476 B1**
(45) Veröffentlichungstag und Bekanntmachung des Hinweises auf die Patenterteilung: **28.05.2025**
(21) Anmeldenummer: 23703410.3
(22) Anmeldetag: 02.02.2023
(51) Int. Cl.: H02K 3/51, H02K 7/18, H02K 13/00

(54) **WICKELKOPFHALTERUNG EINES ROTORS FÜR EINE ELEKTRISCHE MASCHINE**
WINDING HEAD SUPPORT OF A ROTOR FOR AN ELECTRIC MACHINE
SUPPORT DE TÊTE DE BOBINAGE D'UN ROTOR POUR UNE MACHINE ÉLECTRIQUE

(30) Priorität: 21.02.2022 DE 102022104000
(43) Veröffentlichungstag der Anmeldung: 01.01.2025
(73) Patentinhaber: Voith Patent GmbH, 89522 Heidenheim (DE)
(72) Erfinder: WECKERT, Michael, 73432 Aalen (DE); HEINRICH, Bernd, 89129 Öllingen (DE); VESER, Stefan, 89558 Böhmenkirch-Treffelhausen (DE); EILEBRECHT, Philipp, 89518 Heidenheim (DE)
(74) Vertreter: Voith Patent GmbH - Patentabteilung
(86) Internationale Anmeldenummer: PCT/EP2023/052495
(87) Internationale Veröffentlichungsnummer: WO 2023/156206

(56) Entgegenhaltungen:
- EP-A2- 2 557 663
- CN-A- 104 218 715
- DE-A1- 19 535 700
- US-A- 5 606 212

## Beschreibung

Die Erfindung betrifft einen Rotor für eine elektrische Maschine, insbesondere für eine läufergespeiste Schleifringläufermaschine, wie sie für drehzahlregelbare Wasserkraft-Motor-Generatoren für Pumpspeicherkraftwerke zum Einsatz kommen.

Die DE 10 2010 020 415 A1 offenbart einen Rotor, welcher für einen drehzahlregelbaren Wasserkraft-Motor-Generator geeignet ist. Der in dieser Schrift offenbarte Rotor umfasst Wicklungselemente, welche in axial verlaufenden Nuten eines Rotorkörpers in zwei Lagen angeordnet sind, einen Wickelkopf, welcher axial neben dem Rotorkörper angeordnet ist, und einen Wickelkopfträger, wobei der Wickelkopf über Zugbolzen mit dem Wickelkopfträger verbunden ist. Dabei greifen die Zugbolzen an ihrem radial äußeren Enden an Stützkörper an, welche ihrerseits auf den Wicklungselementen der äußeren Lage im Bereich des Wickelkopfs aufliegen. Jedes Wicklungselement wird so von jeweils zwei Zugbolzen mittels je einem Stützkörper pro Zugbolzen im Bereich eines Wickelkopfes gehalten. Pro Wickelkopf sind dabei die Stützkörper und die zugehörigen Zugbolzen in zwei Ringen angeordnet, wobei jeder Ring in einer Ebene senkrecht zur Rotorachse angeordnet ist. Die Ebenen liegen in den Bereichen, in denen die Wicklungselemente einen axial orientierten Verlauf aufweisen.

Die DE 10 2018 124 011 B3 offenbart einen vergleichbaren Rotor. Pro Wickelkopf sind dabei die Stützkörper und die zugehörigen Zugbolzen in drei Ringen angeordnet, wobei jeder Ring in einer Ebene senkrecht zur Rotorachse angeordnet ist. Die Ebenen liegen in den Bereichen, in denen die Wicklungselemente einen axial orientierten Verlauf aufweisen. Daher haben die Wicklungselemente im Bereich des Wickelkopfes einen komplizierten Biegungsverlauf, welcher insgesamt vier Krümmungsbereiche pro Wicklungselement pro Wickelkopf erfordert.

Die DE 195 13 457 A1 offenbart einen vergleichbaren Rotor. Pro Wickelkopf sind dabei die Stützkörper und die zugehörigen Zugbolzen in einer Vielzahl von Ringen angeordnet, wobei jeder Ring in einer Ebene senkrecht zur Rotorachse angeordnet ist.

Eine der Ebenen liegt in einem Bereich, in denen die Wicklungselemente einen axial orientierten Verlauf aufweisen. Die anderen Ebenen liegen in einem Bereich, in denen die Wicklungselemente in einem Winkel zur axialen Richtung verlaufen.

Die Dokumente DE 19535700 A1, US 55606212 A, EP 2557663 A2 und CN 104218715 A offenbaren ähnliche Rotorwickelköpfe , wobei die Abstände zwischen jeweils zwei direkt benachbarten Wicklungselementen gleich ist und die Befestigungsbolzen in alternativer Weise im bzw. am Rotorkörper geschraubt wurden.

Die Aufgabe der Erfindung ist es, einen Rotor anzugeben, welcher einen alternativen Aufbau aufweist und sich durch erhöhte Festigkeit und leichtere Montierbarkeit auszeichnet.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Rotor gemäß dem Stand der Technik
- Fig.2: Erfindungsgemäße Rotoren in zwei Ausführungsformen
- Fig.3: Erfindungsgemäßer Rotor in einer weiteren Ausführungsform
- Fig.4: Erfindungsgemäßer Rotor in einer weiteren Ausführungsform
- Fig.5: Erfindungsgemäßer Rotor in einer weiteren Ausführungsform
- Fig.6: Ausführungsformen der erfindungsgemäßen Haltelemente
- Fig.7: Erfindungsgemäßer Rotor mit Darstellung der Haltelemente

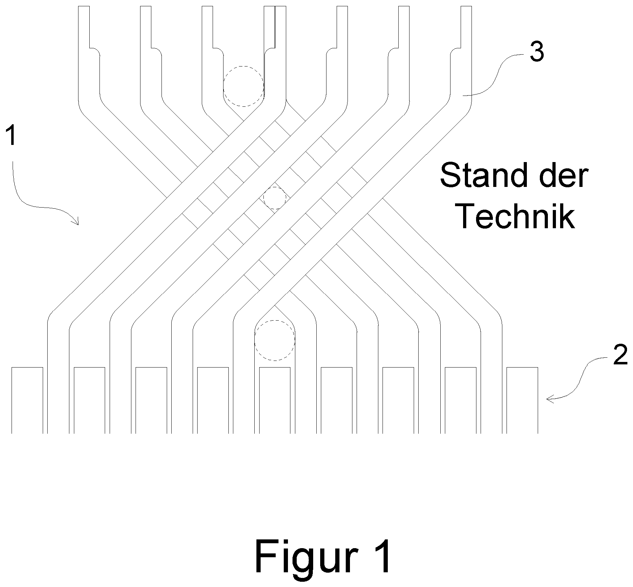

Figur 1 zeigt einen Rotor gemäß der DE 195 13 457 A1. Figur 1 ist eine Abwicklung des Wickelkopfes des Rotors in vereinfachter Darstellung. Der Rotor ist mit 1 bezeichnet. Der Rotor 1 umfasst einen Rotorkörper, welcher mit 2 bezeichnet ist. Der Rotor 1 umfasst Wicklungselemente, welche in axial verlaufenden Nuten des Rotorkörpers 2 in zwei Lagen angeordnet sind. Der Wickelkopf umfasst zwei Bereiche, wobei in einem ersten Bereich die Wicklungselemente in axialer Richtung verlaufen, und wobei in einem zweiten Bereich die Wicklungselemente in einem Winkel zur axialen Richtung verlaufen. Eines der Wicklungselemente der äußeren Lage ist mit 3 bezeichnet. Die in Figur 1 gestrichelt dargestellten Kreise deuten den Raum an, welcher an verschiedenen Stellen für die Durchführung von Zugbolzen zur Verfügung steht. Es ist klar erkennbar, dass dieser Raum im Bereich, in dem die Wicklungselemente axial verlaufen, deutlich größer ist als in dem Bereich, in dem die Wicklungselemente in einem Winkel zur axialen Richtung verlaufen. Die Erfinder haben erkannt, dass die Verwendung von Bolzen mit geringem Durchmesser die Festigkeit des Rotors 1 im Bereich des Wickelkopfes beeinträchtigen können.

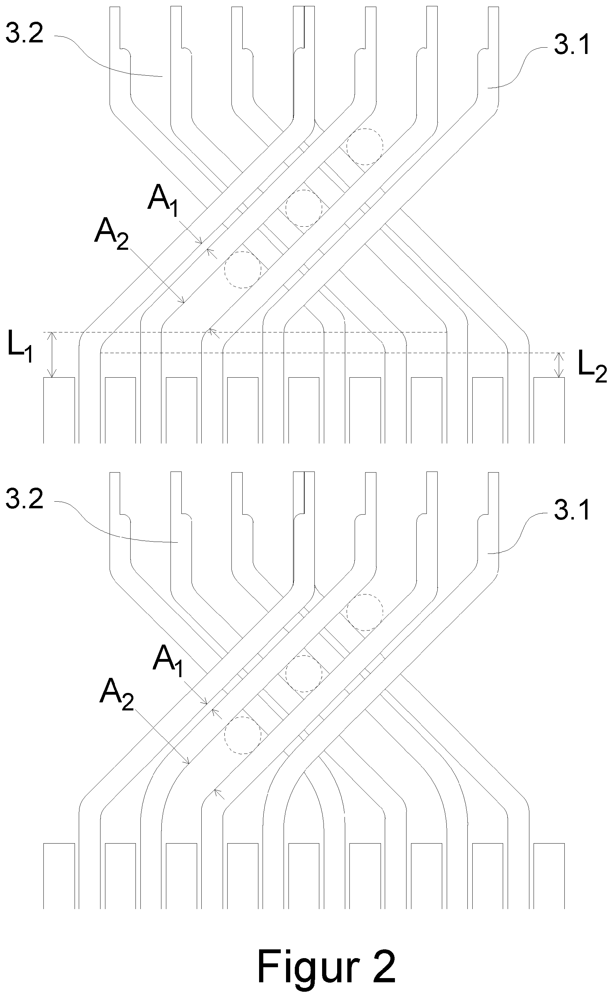

Figur 2 zeigt einen erfindungsgemäßen Rotor in zwei alternativen Ausführungsformen in derselben Darstellungsweise wie Figur 1. Bei den dargestellten Rotoren haben die Wicklungselemente im Bereich, in dem dieselben in einem Winkel zur axialen Richtung verlaufen, unterschiedliche Abstände A₁ und A₂ zu den beiden benachbarten Wicklungselementen derselben Lage. D.h. jedes Wicklungselement hat im Bereich, in dem es in einem Winkel zur axialen Richtung verläuft, einen Abstand A₁ zu einem ersten direkt benachbarten Wicklungselement derselben Lage, und einen Abstand A₂ zu einem zweiten direkt benachbarten Wicklungselement derselben Lage, wobei A₂ größer als A₁ ist. Dabei ist klar, dass jedes Wicklungselement genau zwei direkt benachbarte Wicklungselemente in derselben Lage besitzt. Die Abstände werden dabei in senkrechter Richtung zu der zwischen den Wicklungselementen gelegenen Oberfläche derselben abgetragen (siehe Figur 2). Wie aus Figur 2 hervorgeht, ergeben sich dadurch im Bereich, in denen die Wicklungselemente in einem Winkel zur axialen Richtung verlaufen, Zwischenräume, die geeignet sind Zugbolzen mit größerem Durchmesser aufzunehmen.

Die beiden in Figur 2 dargestellten Ausführungsformen erreichen dies auf unterschiedliche Weise. Bei der im oberen Teil von Figur 2 dargestellten Ausführungsform weisen die Wicklungselemente unterschiedliche Längen L₁ und L₂ auf, um welche sie jeweils aus dem Rotorkörper in axialer Richtung herausragen bevor sie unter einem Winkel zur axialen Richtung verlaufen. In jeder Lage alternieren die Wicklungselemente mit Länge L₁ und Länge L₂. Dadurch kann man in Bezug auf den jeweiligen Wickelkopf zwei Arten bzw. Gruppen von Wicklungselemente unterscheiden. Es ist klar, dass die beiden Gruppen jeweils die Hälfte der Wicklungselemente umfassen. In Figur 2 ist jeweils ein Wicklungselement der beiden Arten bzw. Gruppen mit 3.1 und 3.2 bezeichnet.

Bei der im unteren Teil von Figur 2 dargestellten Ausführungsform weisen die Wicklungselemente unterschiedliche Krümmungsradien R₁ und R₂ auf, unter denen die Wicklungselemente nach dem Austritt aus dem Rotorkörper von der axialen Richtung in die in einem Winkel zur Achse verlaufende Richtung abbiegen. Auch in diesem Fall kann man in Bezug auf den jeweiligen Wickelkopf zwei Arten bzw. Gruppen von Wicklungselemente unterscheiden.

Die weiteren Ausführungsformen werden im Folgenden nur für die Variante gemäß dem oberen Teil von Figur 2 beschrieben. Sie können jedoch problemlos in analoger Weise für die Variante gemäß dem unteren Teil von Figur 2 umgesetzt werden.

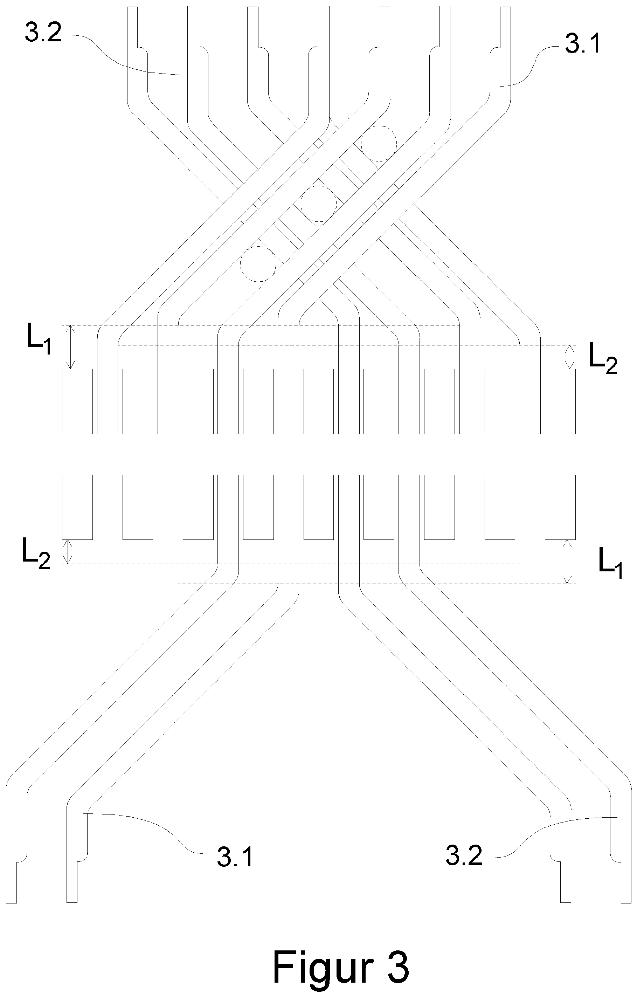

Figur 3 zeigt exemplarisch eine erfindungsgemäße Ausführungsform in Bezug auf eine erste Möglichkeit, wie sich die Wicklungselemente im gegenüberliegenden Wickelkopf fortsetzen können. Im oberen Teil der Figur 3 ist der Wickelkopf wie in Figur 2 dargestellt. Der untere Bereich von Figur 3 zeigt den anderen Wickelkopf, wobei der Übersichtlichkeit halber nur vier der oben dargestellten Wicklungselemente unten fortgesetzt dargestellt sind. In der dargestellten Ausführungsform ragt jedes Wicklungselement in beiden Wickelköpfen um dieselbe Länge axial aus dem Rotorkörper heraus. D.h. ein Wicklungselement 3.1, das in einem Wickelkopf um die Länge L₁ axial aus dem Rotorkörper herausragt, ragt auch im anderen Wickelkopf um die Länge L₁ heraus. Und ein Wicklungselement 3.2, das in einem Wickelkopf um die Länge L₂ axial aus dem Rotorkörper herausragt, ragt auch im anderen Wickelkopf um die Länge L₂ heraus. Das führt dazu, dass die beiden Arten von Wicklungselementen 3.1 und 3.2 nicht nur in Bezug auf einen Wickelkopf voneinander unterscheidbar sind, sondern auch absolut jeweils für sich selbst unterschiedlich ausgebildet sind. Fertigungstechnisch müssen so auch zwei Lose von Wicklungselementen mit unterschiedlicher Bauform hergestellt werden.

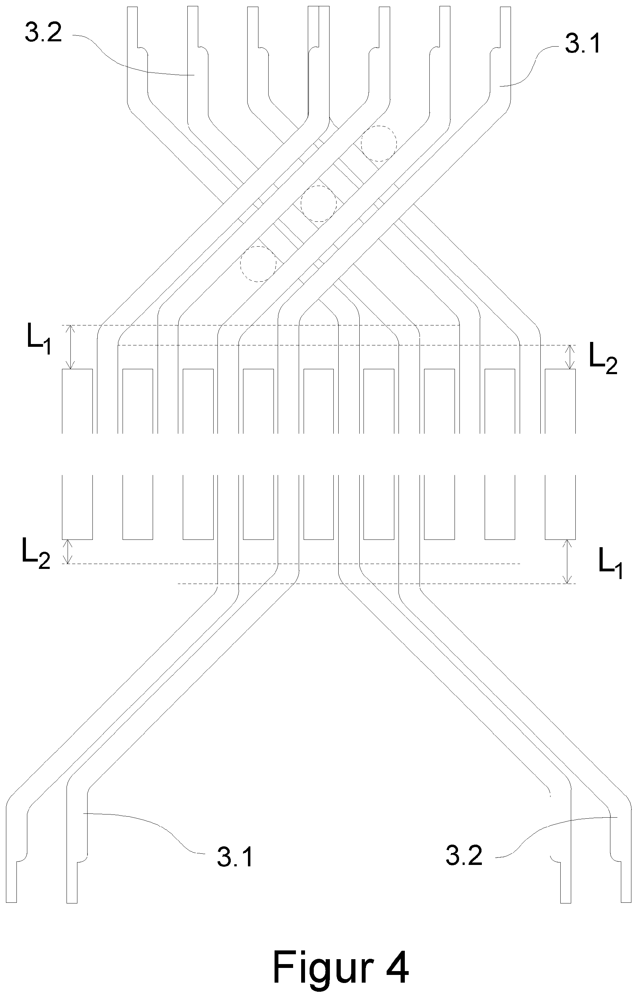

Figur 4 zeigt exemplarisch eine erfindungsgemäße Ausführungsform in Bezug auf eine zweite Möglichkeit, wie sich die Wicklungselemente im gegenüberliegenden Wickelkopf fortsetzen können. Die Darstellungsart ist analog zu Figur 3. In der dargestellten Ausführungsform ragt jedes Wicklungselement in beiden Wickelköpfen um unterschiedliche Längen axial aus dem Rotorkörper heraus. D.h. ein Wicklungselement 3.1, das in einem Wickelkopf um die Länge L₁ axial aus dem Rotorkörper herausragt, ragt im anderen Wickelkopf um die Länge L₂ heraus. Und ein Wicklungselement 3.2, das in einem Wickelkopf um die Länge L₂ axial aus dem Rotorkörper herausragt, ragt im anderen Wickelkopf um die Länge L₁ heraus. Das führt dazu, dass die beiden Arten von Wicklungselementen 3.1 und 3.2 nur in Bezug auf einen Wickelkopf in separater Betrachtung voneinander unterscheidbar sind. Absolut, d.h. vor dem Einbau in den Rotor, unterscheiden sie sich nicht voneinander, da wie aus Figur 4 hervorgeht, jedes Wicklungselement 3.1 durch eine Drehung um 180° senkrecht zur Zeichnungsebene in ein Wicklungselement 3.2 übergeht. D.h. die Wicklungselemente unterscheiden sich nur durch die Einbaulage. Fertigungstechnisch kann also ein einziges Los von Wicklungselementen mit identischer Bauform hergestellt werden.

Es sei erwähnt, dass sich die Wicklungselemente der einzelnen Lagen von der Bauform her generell leicht voneinander unterscheiden, was jedoch in den gezeigten Figuren aufgrund der Darstellungsform nicht zu erkennen ist. D.h. streng genommen gilt das in den vorangehenden Abschnitten Gesagte nur für die Wicklungselemente ein und derselben Lage.

Im Folgenden werden weitere vorteilhafte Ausgestaltungsmöglichkeiten der vorliegenden Erfindung beschrieben, was die die Ausbildung der Halteelemente anbelangt, mit denen die Wicklungselemente im Bereich des Wickelkopfes gehalten werden.

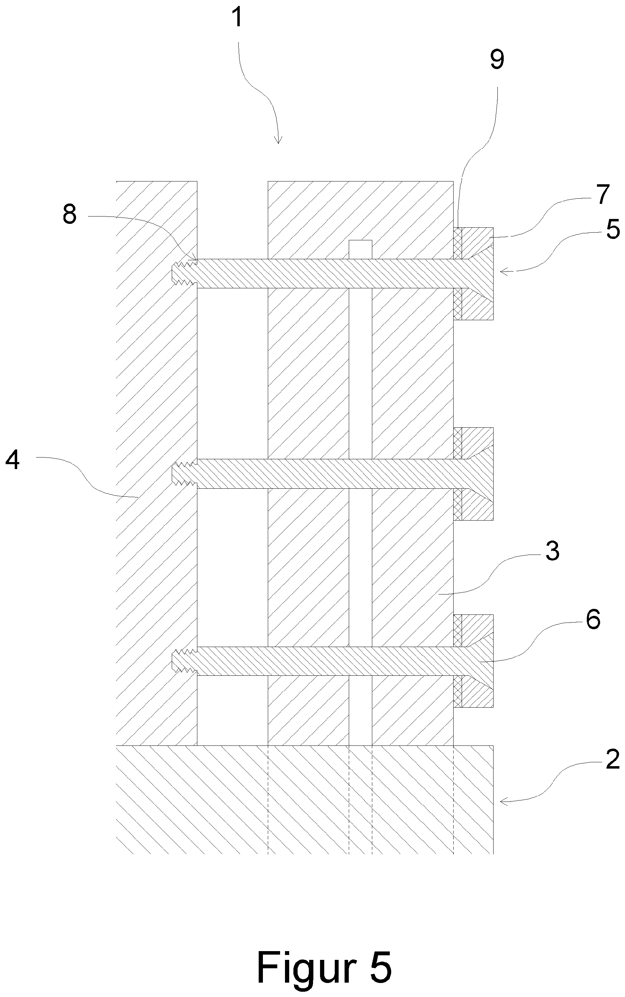

Figur 5 zeigt einen erfindungsgemäßen Rotor in schematischer Darstellung. Dabei ist in Figur 5 nur ein Ausschnitt des Rotors dargestellt. Der Rotor ist mit 1 bezeichnet. Der Rotor 1 umfasst einen Rotorkörper, welcher mit 2 bezeichnet ist, und eine Vielzahl von Wicklungselementen, welche in axial verlaufenden Nuten des Rotorkörpers 2 angeordnet sind. Dabei bilden die Wicklungselemente in radialer Richtung zwei Lagen. Die Wicklungselemente ragen in axialer Richtung über den Rotorkörper 2 hinaus und bilden so einen sogenannten Wickelkopf, welcher axial neben dem Rotorkörper 2 angeordnet ist. Dabei ist jeweils ein Wicklungselement der einen Lage an seinem Ende mit dem Ende eines Wicklungselementes der anderen Lage verbunden. In Figur 5 ist ein Wicklungselement mit 3 bezeichnet.

Damit die Wicklungselemente 3 durch die enormen Fliehkräfte, welche beim Betrieb der elektrischen Maschine wirken, nicht nach radial außen gebogen werden, müssen dieselben im Bereich des Wickelkopfes in ihrer Position gehalten werden. Dazu umfasst der Wickelkopf einen Wickelkopfträger, welcher in Figur 5 mit 4 bezeichnet ist und eine Vielzahl von Halteelementen, von denen eines in Figur 5 mit 5 bezeichnet ist. Dabei umfasst jedes Halteelement 5 jeweils einen Zugbolzen und einen Stützkörper. In Figur 5 ist einer der Zugbolzen mit 6 und einer der Stützkörper mit 7 bezeichnet. Die Stützkörper 7 sind in radialer Richtung außerhalb der Wicklungselemente 3 angeordnet. Die Zugbolzen 6 durchdringen jeweils den zugehörigen Stützkörper 7 und sind mit einem Gewinde in den Wickelkopfträger 4 eingeschraubt. Dabei kann der Wickelkopfträger 4 auch aus mehreren Teilen bestehen, so dass die Zugbolzen 6 beispielsweise in Profilleisten eingeschraubt werden, welche in entsprechenden Nuten des Wickelkopfträgerkörpers angeordnet sind. Profilleisten und Wickelkopfträgerkörper sind dann Teile des Wickelkopfträgers 4.

Es ist von Vorteil, wenn die Halteelemente 5 eine Anschlagfläche 8 umfassen, welche so ausgebildet ist, dass dieselbe beim Einschrauben der Zugbolzen 6 an den Wickelkopfträger 4 zum Anliegen kommen kann, um so die radiale Länge, mit der die Zugbolzen 6 aus dem Wickelkopfträger 4 herausragen, auf ein vordefiniertes Maß einzustellen. Dabei ist das vordefinierte Maß so bemessen, dass dabei die Stützkörper 7 in Ruhelage des Rotors 1 nicht gegen die Wicklungselemente 3 gepresst werden. D.h. in Ruhelage des Rotors 1 berühren die Stützkörper 7 idealerweise gerade die Wicklungselemente 3, wenn die Zugbolzen 6 so weit in den Wickelkopfträger 4 eingeschraubt werden, dass die Anschlagfläche 8 an den Wickelkopfträger 4 zum Anliegen kommt. Alternativ kann in der genannten Lage auch ein (kleiner) Zwischenraum zwischen Stützkörper 7 und Wicklungselemente 3 vorhanden sein.

Dabei ist das Merkmal "dass die Stützkörper 7 in Ruhelage des Rotors 1 nicht gegen die Wicklungselemente 3 gepresst werden" so zu verstehen, dass die Druckkraft, die durch die angezogenen Zugbolzen 6 in Ruhelage des Rotors 1 auf die Wicklungselemente 3 übertragen wird, vernachlässigbar klein gegenüber der in den angezogenen Zugbolzen 6 wirkenden Zugkraft ist. Das ist dann der Fall, wenn die durch einen angezogenen Zugbolzen 6 auf die Wicklungselemente 3 übertragene Druckkraft kleiner als 15% der im betreffenden Zugbolzen 6 wirkenden Zugkraft ist.

Die so ausgebildeten Anschlagflächen 8 verhindern einerseits, dass die Wicklungselemente 3 beim Einschrauben der Zugbolzen 6 verformt werden. Andererseits gewährleisten dieselben eine Verspannung der Schraubverbindung zwischen Zugbolzen 6 und Wickelkopfträger 4, so dass sich die Schraubverbindung, während dem Betrieb des Rotors 1, nicht lösen kann. Eine hohe Vorspannung der Zugbolzen 6 bewirkt außerdem, dass die während dem Betrieb zusätzlich auf die Zugbolzen 6 wirkende Kraft klein gegenüber der Vorspannkraft ist, wodurch sich die Lebensdauer der Zugbolzen 6 verlängert.

Optional können die Halteelemente 5 ein elastisches Element umfassen, welches in dem Zwischenraum zwischen dem zugehörigen Stützkörper 7 und den vom betreffenden Halteelement 5 gehaltenen Wicklungselementen 3 angeordnet ist. In Figur 5 ist ein solches elastisches Element mit 9 bezeichnet. Dabei sind die elastischen Elemente 9 so ausgelegt, dass dieselben in radialer Richtung geringfügig zusammengepresst werden, wenn die Zugbolzen 6 soweit eingeschraubt werden, bis die zugehörigen Anschlagflächen 8 zum Anliegen an den Wickelkopfträger 4 kommen. Dabei ist das Elastizitätsmodul der elastischen Elemente 9 so zu wählen, dass es bei dem genannten Zusammenpressen derselben nicht zu einer signifikanten Verformung der Wicklungselemente 3 kommen kann. Mit anderen Worten: Die elastischen Elemente 9 sind so ausgelegt, dass es zu keiner signifikanten Verformung der Wicklungselemente 3 kommen kann, wenn die Zugbolzen 6 soweit eingeschraubt werden, bis die zugehörigen Anschlagflächen 8 zum Anliegen an den Wickelkopfträger 4 kommen.

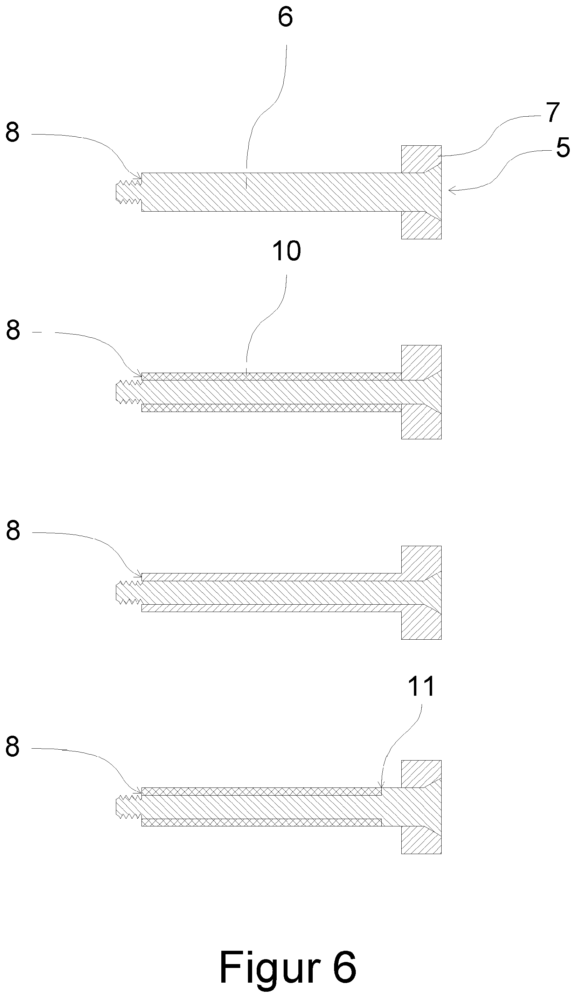

Figur 6 zeigt verschiedene Ausführungsformen erfindungsgemäßer Haltelemente 5. In der oben gezeigten Ausführungsform wird die Anschlagfläche 8 durch einen Absatz des Zugbolzens 6 gebildet. In der von oben zweiten Ausführungsform umfasst das Halteelement 5 eine Hülse, welche mit 10 bezeichnet ist. Der Zugbolzen 6 durchdringt die Hülse 10, und die Anschlagfläche 8 wird durch das Ende der Hülse 10 gebildet, welche zum Wickelkopfträger 4 hin orientiert ist. In der von oben dritten Ausführungsform umfasst der Stützkörper 7 eine hülsenartige Ausstülpung, wobei die Anschlagfläche 8 am Ende der Ausstülpung angeordnet ist. Bei der letztgenannte Ausführungsform sind die Stützkörper 7 nur teilweise in radialer Richtung außerhalb der Wicklungselemente 3 angeordnet, da die hülsenförmige Ausstülpung derselben zwischen die Wicklungselemente 3 hineinragt. Diese Ausstülpung kann auch dazu dienen die durch das betreffende Halteelement gehaltenen Wicklungselemente in lateraler Richtung abzustützen. Eine weitere Ausführungsform ergibt sich durch eine Kombination der beiden letztgenannten Ausführungsformen, indem eine kürzere Hülse 10 mit einer entsprechend kürzeren Ausstülpung des Stützkörpers 7 kombiniert wird. Dabei wird die Anschlagfläche 8 durch das Ende der Hülse 10 gebildet. In der unteren in Figur 6 gezeigten Ausführungsform umfasst der Zugbolzen 6 einen Absatz, welcher mit 11 bezeichnet ist und welcher beim Einschrauben gegen eine Hülse 10 drückt. Die Anschlagfläche 8 wird auch hier durch das Ende der Hülse 10 gebildet. Bei dieser Ausführungsform ergibt sich der Vorteil, dass der Stützkörper 7 weitestgehend entlastet wird. Weitere Ausführungsformen ergeben sich durch die Verwendung mehrerer Hülsen 10 pro Zugbolzen 6, wobei die Hülsen 10 beim Einschrauben des zugehörigen Zugbolzens 6 gegeneinandergepresst werden.

Wie aus Figur 6 hervorgeht, weisen die Halteelemente 5, welche eine Anschlagfläche 8 umfassen, dadurch einen größeren Durchmesser in dem Teilstück auf, mit dem sie den Wickelkopf durchdringen. Dadurch dass ein erfindungsgemäßer Wickelkopf auch im Bereich, in dem die Wicklungselemente in einem Winkel zur axialen Richtung verlaufen, gegenüber den bekannten Wickelköpfen vergrößerte Durchlässe aufweisen, können Halteelemente 5 gemäß Figur 6 auch in diesem Bereich verwendet werden. Alternativ können aber auch herkömmliche Halteelemente ohne Anschlagfläche 8 verwendet werden. Dabei kann der gewonnene Raum für einen größeren Durchmesser der Zugbolzen 6 verwendet werden.

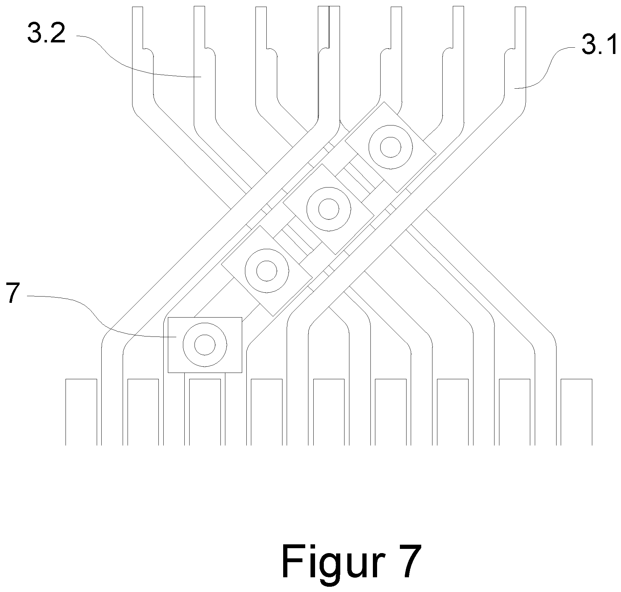

In Figur 7 ist ein erfindungsgemäßer Rotor nach der Ausführungsform von Figur 2 oberer Teil dargestellt, wobei die Lage der Stützkörper 7 in den beiden unterschiedlichen Bereichen des Wickelkopfes gezeigt wird. Wenigstens ein Teil der Zugbolzen durchdringt dabei den Wickelkopf in radialer Richtung im Bereich, in dem die Wicklungselemente unter einem Winkel zur axialen Richtung verlaufen.

### Bezugszeichenliste

- 1: Rotor
- 2: Rotorkörper
- 3: Wicklungselement
- 3.1: Wicklungselement
- 3.2: Wicklungselement
- 4: Wickelkopfträger
- 5: Halteelemente
- 6: Zugbolzen
- 7: Stützkörper
- 8: Anschlagfläche
- 9: Elastisches Element
- 10: Hülse
- 11: Absatz

## Patentansprüche

1. Rotor (1) für eine elektrische Maschine mit einem Rotorkörper (2), einer Vielzahl von Wicklungselementen (3, 3.1, 3.2) und einem axial neben dem Rotorköper (2) angeordneten Wickelkopf, wobei die Wicklungselemente (3, 3.1, 3.2) in axial verlaufenden Nuten des Rotorkörpers (2) in zwei Lagen angeordnet sind, und wobei der Wickelkopf zwei Bereiche umfasst, wobei in einem ersten Bereich die Wicklungselemente (3, 3.1, 3.2) in axialer Richtung verlaufen, und wobei in einem zweiten Bereich die Wicklungselemente (3, 3.1, 3.2) in einem Winkel zur axialen Richtung verlaufen, und wobei der Wickelkopf einen Wickelkopfträger (4) und eine Vielzahl von Halteelemente (5) umfasst, und wobei jedes Halteelement (5) jeweils einen Zugbolzen (6) und einen Stützkörper (7) umfasst, und wobei die Stützkörper (7) wenigstens teilweise in radialer Richtung außerhalb der Wicklungselemente (3, 3.1, 3.2) angeordnet sind, und wobei die Zugbolzen (6) jeweils den zugehörigen Stützkörper (7) durchdringen und mit einem Gewinde in den Wickelkopfträger (4) eingeschraubt sind, und wobei wenigstens ein Teil der Zugbolzen (6) den Wickelkopf in radialer Richtung im zweiten Bereich durchdringt, **dadurch gekennzeichnet, dass** jedes Wicklungselement (3, 3.1, 3.2) im zweiten Bereich, in dem es in einem Winkel zur axialen Richtung verläuft, einen Abstand A₁ zu einem ersten direkt benachbarten Wicklungselement (3, 3.1, 3.2) derselben Lage hat, und einen Abstand A₂ zu einem zweiten direkt benachbarten Wicklungselement (3, 3.1, 3.2) derselben Lage hat, wobei A₂ größer als A₁ ist.

2. Rotor (1) nach Anspruch 1, wobei die Hälfte der Wicklungselemente (3.1) eine erste Gruppe bilden, und wobei die andere Hälfte der Wicklungselemente (3.2) eine zweite Gruppe bilden, und wobei die Wicklungselemente (3.1) der ersten Gruppe um eine Länge L₁ aus dem Rotorkörper (2) in axialer Richtung herausragen bevor sie unter einem Winkel zur axialen Richtung verlaufen, und wobei die Wicklungselemente (3.2) der zweiten Gruppe um eine Länge L₂ aus dem Rotorkörper (2) in axialer Richtung herausragen bevor sie unter einem Winkel zur axialen Richtung verlaufen, und wobei L₁ größer als L₂ ist.

3. Rotor (1) nach Anspruch 1, wobei die Hälfte der Wicklungselemente (3.1) eine erste Gruppe bilden, und wobei die andere Hälfte der Wicklungselemente (3.2) eine zweite Gruppe bilden, und wobei die Wicklungselemente (3.1) der ersten Gruppe einen Krümmungsradius R₁ aufweisen, unter dem dieselben nach dem Austritt aus dem Rotorkörper (2) von der axialen Richtung in die in einem Winkel zur Achse verlaufende Richtung abbiegen, und wobei die Wicklungselemente (3.2) der zweiten Gruppe einen Krümmungsradius R₂ aufweisen, unter dem dieselben nach dem Austritt aus dem Rotorkörper (2) von der axialen Richtung in die in einem Winkel zur Achse verlaufende Richtung abbiegen, und wobei R₁ größer als R₂ ist

4. Rotor (1) nach Anspruch 2 oder 3, wobei in Bezug auf eine Lage die Wicklungselemente (3.1) der ersten Gruppe und die Wicklungselemente (3.2) der zweiten Gruppe sich bezüglich der Bauform unterscheiden.

5. Rotor (1) nach Anspruch 2 oder 3, wobei in Bezug auf eine Lage sich die Wicklungselemente (3.1) der ersten Gruppe und die Wicklungselemente (3.2) der zweiten Gruppe sich bezüglich der Bauform nicht unterscheiden.

6. Rotor (1) nach einem der Ansprüche 1 bis 5, wobei die Halteelemente (5) jeweils eine Anschlagfläche (8) umfassen, welche so ausgebildet ist, dass dieselbe beim Einschrauben der Zugbolzen (7) an den Wickelkopfträger (4) zum Anliegen kommen kann, um so die radiale Länge, mit der die Zugbolzen (6) aus dem Wickelkopfträger (4) herausragen, auf ein vordefiniertes Maß einzustellen, wobei das vordefinierte Maß so bemessen ist, dass dabei die Stützkörper (7) in Ruhelage des Rotors (1) nicht gegen die Wicklungselemente (3) gepresst werden.

7. Rotor (1) nach Anspruch 6, und wobei ein Halteelement (5) ein elastisches Element (9) umfasst, welches in einem Zwischenraum zwischen dem zugehörigen Stützkörper (7) und den vom Halteelement gehaltenen Wicklungselementen (3) angeordnet ist.

8. Rotor (1) nach Anspruch 6 oder 7, und wobei eine Anschlagfläche (8) durch einen Absatz des Zugbolzens (6) gebildet wird.

9. Rotor (1) nach Anspruch 6 oder 7, und wobei ein Halteelement (5) eine Hülse (10) umfasst, und wobei der Zugbolzen (6) die Hülse (10) durchdringt, und wobei die Anschlagfläche (8) durch das Ende der Hülse (10) gebildet wird, welche zum Wickelkopfträger (4) hin orientiert angeordnet ist.

10. Rotor (1) nach Anspruch 9, wobei der Zugbolzen (6) einen Absatz (11) umfasst, welcher beim Anziehen des Zugbolzens (6) gegen die Hülse (10) gepresst werden kann.

11. Rotor (1) nach Anspruch 6 oder 7, und wobei ein Stützkörper (7) eine hülsenartige Ausstülpung umfasst, und wobei die Anschlagfläche (8) am Ende der Ausstülpung angeordnet ist.

## Claims

1. Rotor (1) for an electrical machine with a rotor body (2), a plurality of winding elements (3, 3.1, 3.2) and a winding head arranged axially next to the rotor body (2), wherein the winding elements (3, 3.1, 3.2) are arranged in two layers in axially extending grooves of the rotor body (2), and wherein the winding head comprises two regions, wherein in a first region the winding elements (3, 3.1, 3.2) extend in the axial direction, and wherein in a second region the winding elements (3, 3.1, 3.2) extend at an angle to the axial direction, and wherein the winding head comprises a winding head (3, 3.1, 3.2) extending in the axial direction.2) extend in an axial direction, and wherein in a second region the winding elements (3, 3.1, 3.2) extend at an angle to the axial direction, and wherein the winding head comprises a winding head carrier (4) and a plurality of retaining elements (5), and wherein each retaining element (5) comprises a respective tension bolt (6) and a supporting body (7), and wherein the supporting bodies (7) are arranged at least partially in the radial direction outside the winding elements (3, 3.1, 3.2), and wherein the tension bolts (6) each penetrate the associated supporting body (7) and are screwed into the winding head carrier (4) with a thread, and wherein at least some of the tension bolts (6) penetrate the winding head in the radial direction in the second region, **characterised in that** each winding element (3, 3.1, 3.2) in the second region, in which it extends at an angle to the axial direction, has a distance A₁ from a first directly adjacent winding element (3, 3.1, 3.2) of the same position, and has a distance A₂ from a second directly adjacent winding element (3, 3.1, 3.2) of the same position, A₂ being greater than A₁

2. Rotor (1) according to claim 1, wherein half of the winding elements (3.1) form a first group, and wherein the other half of the winding elements (3.2) form a second group, and wherein the winding elements (3.1) of the first group protrude by a length L₁ from the rotor body (2) in the axial direction before they extend at an angle to the axial direction, and wherein the winding elements (3.2) of the second group protrude by a length L₂ from the rotor body (2) in the axial direction before they extend at an angle to the axial direction, and wherein L₁ is greater than L₍₂₎.

3. Rotor (1) according to claim 1, wherein half of the winding elements (3.1) form a first group, and wherein the other half of the winding elements (3.2) form a second group, and wherein the winding elements (3.1) of the first group have a radius of curvature R₁ below which the same bend from the axial direction in the direction extending at an angle to the axis after emerging from the rotor body (2), and wherein the winding elements (3.2) of the second group have a radius of curvature R₍₂₎below which the same bend from the axial direction in the direction extending at an angle to the axis after emerging from the rotor body (2).2) of the second group have a radius of curvature R₂, below which they bend from the axial direction in the direction extending at an angle to the axis after emerging from the rotor body (2), and wherein R₁ is greater than R₂

4. Rotor (1) according to claim 2 or 3, wherein the winding elements (3.1) of the first group and the winding elements (3.2) of the second group differ in terms of their design with respect to the layers.

5. Rotor (1) according to claim 2 or 3, wherein the winding elements (3.1) of the first group and the winding elements (3.2) of the second group do not differ with regard to the design with respect to the layers.

6. Rotor (1) according to one of claims 1 to 5, wherein the retaining elements (5) each comprise a stop surface (8) which is designed in such a way that it can come to bear against the winding head carrier (4) when the tension bolts (7) are screwed in, in order to set the radial length with which the tension bolts (6) protrude from the winding head carrier (4) to a predefined dimension, wherein the predefined dimension is dimensioned in such a way that the supporting bodies (7) are thereby adjusted to a predefined dimension, with which the tension bolts (6) protrude from the winding head carrier (4) to a predefined dimension, the predefined dimension being dimensioned such that the supporting bodies (7) are not pressed against the winding elements (3) when the rotor (1) is at rest.

7. Rotor (1) according to claim 6, and wherein a retaining element (5) comprises an elastic element (9) which is arranged in an intermediate space between the associated supporting body (7) and the winding elements (3) held by the retaining element.

8. Rotor (1) according to claim 6 or 7, and wherein a stop surface (8) is formed by a shoulder of the tension bolt (6).

9. Rotor (1) according to claim 6 or 7, and wherein a retaining element (5) comprises a sleeve (10), and wherein the tension bolt (6) penetrates the sleeve (10), and wherein the stop surface (8) is formed by the end of the sleeve (10), which is orientated towards the winding head support (4).

10. Rotor (1) according to claim 9, wherein the tension bolt (6) comprises a shoulder (11) which can be pressed against the sleeve (10) when the tension bolt (6) is tightened.

11. Rotor (1) according to claim 6 or 7, and wherein a supporting body (7) comprises a sleeve-like protuberance, and wherein the stop surface (8) is arranged at the end of the protuberance.

## Revendications

1. Rotor (1) pour une machine électrique avec un corps de rotor (2), une pluralité d'éléments d'enroulement (3, 3.1, 3.2) et une tête de bobinage disposée axialement à côté du corps de rotor (2), les éléments d'enroulement (3, 3.1, 3.2) étant disposés en deux couches dans des rainures s'étendant axialement du corps de rotor (2), et la tête de bobinage comprenant deux zones, les éléments d'enroulement (3, 3.1, 3.2) étant disposés dans une première zone dans un sens axial.2) s'étendent dans la direction axiale, et dans une deuxième zone, les éléments d'enroulement (3, 3.1, 3.2) s'étendent selon un angle par rapport à la direction axiale, et dans lequel la tête d'enroulement comprend un support de tête d'enroulement (4) et une pluralité d'éléments de retenue (5), et dans lequel chaque élément de retenue (5) comprend respectivement un boulon de traction (6) et un corps de support (7), et dans lequel les corps de support (7) s'étendent au moins partiellement dans la direction radiale à l'extérieur des éléments d'enroulement (3, 3.1, 3.2).1, 3.2), et les boulons de traction (6) traversant chacun le corps d'appui (7) correspondant et étant vissés avec un filetage dans le support de tête d'enroulement (4), et au moins une partie des boulons de traction (6) traversant la tête d'enroulement en direction radiale dans la deuxième zone, **caractérisé en ce que** chaque élément d'enroulement (3, 3.1, 3.2) présente dans la deuxième zone, dans laquelle il s'étend selon un angle par rapport à la direction axiale, une distance A₁ par rapport à un premier élément d'enroulement directement adjacent (3, 3.1, 3.2) de la même position, et une distance A₂ par rapport à un deuxième élément d'enroulement directement adjacent (3, 3.1, 3.2) de la même position, A₂ étant supérieur à A₁

2. Rotor (1) selon la revendication 1, dans lequel la moitié des éléments d'enroulement (3.1) forment un premier groupe, et dans lequel l'autre moitié des éléments d'enroulement (3.2) forment un deuxième groupe, et dans lequel les éléments d'enroulement (3.1) du premier groupe dépassent dune longueur L₁ du corps de rotor (2) dans la direction axiale avant de former un angle avec la direction axiale, et dans lequel les éléments d'enroulement (3.2) du deuxième groupe dépassent dune longueur L₂ du corps de rotor (2) dans la direction axiale avant de former un angle avec la direction axiale, et dans lequel L₁ est supérieur à L₂.

3. Rotor (1) selon la revendication 1, dans lequel la moitié des éléments d'enroulement (3.1) forment un premier groupe, et dans lequel l'autre moitié des éléments d'enroulement (3.2) forment un deuxième groupe, et dans lequel les éléments d'enroulement (3.1) du premier groupe présentent un rayon de courbure R₁ sous lequel ils s'écartent de la direction axiale dans la direction formant un angle avec l'axe après la sortie du corps de rotor (2), et dans lequel les éléments d'enroulement (3.2) du deuxième groupe présentent un rayon de courbure R₂ sous lequel ils s'écartent de la direction axiale dans la direction formant un angle avec l'axe après la sortie du corps de rotor (2).2) du second groupe ont un rayon de courbure R₂ en dessous duquel ils s'écartent de la direction axiale dans la direction formant un angle avec l'axe après être sortis du corps de rotor (2), et où R₁ est supérieur à R₍₂₎.

4. Rotor (1) selon la revendication 2 ou 3, dans lequel, par rapport à une couche, les éléments d'enroulement (3.1) du premier groupe et les éléments d'enroulement (3.2) du deuxième groupe diffèrent en ce qui concerne la forme de construction.

5. Rotor (1) selon la revendication 2 ou 3, dans lequel, par rapport à une couche, les éléments d'enroulement (3.1) du premier groupe et les éléments d'enroulement (3.2) du deuxième groupe ne diffèrent pas en ce qui concerne la forme de construction.

6. Rotor (1) selon l'une quelconque des revendications 1 à 5, dans lequel les éléments de retenue (5) comprennent chacun une surface de butée (8) qui est conçue de telle sorte qu'elle puisse venir en appui contre le support de tête d'enroulement (4) lors du vissage des boulons de traction (7), de manière à régler la longueur radiale, la mesure prédéfinie est telle que les corps d'appui (7) ne sont pas pressés contre les éléments d'enroulement (3) lorsque le rotor (1) est en position de repos.

7. Rotor (1) selon la revendication 6, et dans lequel un élément de retenue (5) comprend un élément élastique (9) qui est disposé dans un espace intermédiaire entre le corps de support associé (7) et les éléments d'enroulement (3) retenus par l'élément de retenue.

8. Rotor (1) selon la revendication 6 ou 7, et dans lequel une surface de butée (8) est formée par un épaulement du boulon de traction (6).

9. Rotor (1) selon la revendication 6 ou 7, et dans lequel un élément de retenue (5) comprend un manchon (10), et dans lequel le boulon de traction (6) traverse le manchon (10), et dans lequel la surface de butée (8) est formée par l'extrémité du manchon (10), qui est disposée en étant orientée vers le support de tête d'enroulement (4).

10. Rotor (1) selon la revendication 9, dans lequel le boulon de traction (6) comprend un épaulement (11) qui peut être pressé contre le manchon (10) lors du serrage du boulon de traction (6).

11. Rotor (1) selon la revendication 6 ou 7, et dans lequel un corps de support (7) comprend une protubérance en forme de manchon, et dans lequel la surface de butée (8) est disposée à l'extrémité de la protubérance.
